# EUROPÄISCHE PATENTANMELDUNG

(11) **EP 2 874 279 A1**
(43) Veröffentlichungstag der Anmeldung: **20.05.2015**
(21) Anmeldenummer: 13193141.2
(22) Anmeldetag: 15.11.2013
(51) Int. Cl.: H02K 3/12, H02K 3/48, H01F 27/28, H01F 41/06, H02K 15/04, H02K 15/06, H01F 41/04

(54) **Verfahren zum Herstellen einer Windung für eine Spulenwicklung eines Läufers einer rotierenden elektrischen Maschine**

(71) Anmelder: Siemens Aktiengesellschaft, 80333 München (DE)
(72) Erfinder: Braam, Jan-Henrik, 47546 Kalkar (DE); Ertl, David, 47058 Duisburg (DE); Evers, Christoph, 46236 Bottrop (DE); Grau Sorarrain, Esteban, 40215 Düsseldorf (DE); Hu, Marie, 45479 Mülheim an der Ruhr (DE); Höfel, Mark, 41469 Neuss (DE); Höhner, Rene, 45891 Gelsenkirchen (DE); Lehmann, Christoph, 47506 Neukirchen-Vluyn (DE); Nobbe, Christoph, 49082 Osnabrück (DE); Pott, Teresa, 45468 Mülheim (DE)

(57) **Zusammenfassung**

Die Erfindung betrifft ein Verfahren zum Herstellen einer Windung für eine Spulenwicklung eines Läufers einer rotierenden elektrischen Maschine, insbesondere eines Turbogenerators, wobei ein einstückig und im Wesentlichen rechteckig ausgebildeter Leiterring hergestellt wird, der zwei parallel zueinander und beabstandet voneinander angeordnete, in Längsnuten an dem Läufer anordbare Längsleiter und zwei parallel zueinander und beabstandet voneinander angeordnete, die Längsleiter jeweils endseitig miteinander verbindende Querleiter aufweist, wobei ausschließlich ein Längsleiter in einem seiner Endbereiche eine Unterbrechung aufweist, und wobei der Leiterring zur Anpassung seiner Formgebung an eine Formgebung des Läufers im Bereich seiner Querleiter umgeformt wird.

## Beschreibung

Die Erfindung betrifft ein Verfahren zum Herstellen einer Windung für eine Spulenwicklung eines Läufers einer rotierenden elektrischen Maschine, insbesondere eines Turbogenerators.

Des Weiteren betrifft die Erfindung eine Windung für eine Spulenwicklung eines Läufers einer rotierenden elektrischen Maschine, insbesondere eines Turbogenerators, aufweisend zwei parallel zueinander und beabstandet voneinander angeordnete, in Längsnuten an dem Läufer anordbare Längsleiter und zwei beabstandet voneinander angeordnete, die Längsleiter jeweils endseitig miteinander verbindende Querleiter.

Ferner betrifft die Erfindung ein Verfahren zum Anbringen einer Windung an einem mit Längsnuten versehenen Läufer einer rotierenden elektrischen Maschine, insbesondere eines Turbogenerators.

Zur Erzeugung von elektrischer Energie mittels einer rotierenden elektrischen Maschine weist ein Läufer der rotierenden elektrischen Maschine eine oder mehrere Spulen auf. Die Windungen solcher Spulen können einzeln hergestellt und anschließend zur Ausbildung einer Spule miteinander verbunden werden. Insbesondere im Zusammenhang mit Turbogeneratoren ist es bekannt, Längsleiter von Spulenwindungen in Längsnuten an einem Läufer des Turbogenerators anzuordnen. Zwischen den einzelnen Windungen einer Spule müssen elektrische Zwischenisolationen angeordnet sein, um ungewünschte elektrisch leitende Verbindungen zwischen den Windungen zu vermeiden.

Es ist bekannt, einzelne Windungen für Spulen aus zwei oder mehreren miteinander zu verbindenden Windungsteilen herzustellen. Die Windungsteile werden herkömmlich beispielsweise über Lötverbindungen miteinander verbunden. Lötstellen an Windungen werden jedoch im Betrieb eines entsprechend ausgebildeten Generators stark beansprucht, wodurch es schlimmstenfalls zu einem Lösen einer Lötverbindung und somit zu einer Fehlfunktion einer rotierenden elektrischen Maschine kommen kann. Daher werden üblicherweise Lötverbindungen aus mechanisch stark belasteten Eckbereichen von Windungen in weniger stark belastete Axial- oder Querbereiche der Windungen verlegt.

Aufgabe der Erfindung ist es, die Robustheit einer rotierenden elektrischen Maschine zu verbessern und gleichzeitig den mit einer entsprechenden rotierenden elektrischen Maschine verbundenen Fertigungs- und Wartungsaufwand und damit verbundene Kosten zu reduzieren.

Nach dem erfindungsgemäßen Verfahren zum Herstellen einer Windung für eine Spulenwicklung eines Läufers einer rotierenden elektrischen Maschine, insbesondere Turbogenerators, wird ein einstückig und im Wesentlichen rechteckig ausgebildeter Leiterring hergestellt, der zwei parallel zueinander und beabstandet voneinander angeordnete, in Längsnuten an dem Läufer anordbare Längsleiter und zwei parallel zueinander und beabstandet voneinander angeordnete, die Längsleiter jeweils endseitig miteinander verbindende Querleiter aufweist, wobei ausschließlich ein Längsleiter in einem seiner Endbereiche eine Unterbrechung aufweist, und wird des Weiteren der Leiterring zur Anpassung seiner Formgebung an eine Formgebung des Läufers im Bereich seiner Querleiter umgeformt.

Erfindungsgemäß wird zunächst ein Leiterring hergestellt, welcher geschlossen oder offen ausgebildet sein kann und der aus einem Metall, insbesondere Kupfer, besteht.

Dass der Leiterring einstückig ausgebildet ist, soll bedeuten, dass der Leiterring nicht aus verschiedenen Teilen zusammengesetzt ist. Stattdessen kann der erfindungsgemäße Leiterring unter Verwendung eines bestimmten Herstellungsverfahrens als Ganzes hergestellt werden, ohne dass Montageschritte erforderlich sind. Zur Ausbildung des erfindungsgemäßen Leiterrings ist somit keine Ausbildung von Verbindungsstellen, beispielsweise Lötverbindungsstellen, erforderlich. Hiermit geht eine Reduzierung von Montagezeiten und damit verbundenen Kosten einher.

Dass der Leiterring im Wesentlichen rechteckig ausgebildet ist, soll bedeuten, dass im Rahmen der Erfindung für den Fachmann selbstverständlich auch Abweichungen des Leiterrings von einer idealen Rechteckform möglich sind. Beispielsweise können abgerundete Ecken oder dergleichen an dem Leiterring ausgebildet sein.

Erfindungsgemäß weist ausschließlich ein Längsleiter in einem seiner Endbereiche eine Unterbrechung auf. Der Leiterring weist folglich ausschließlich eine einzige Unterbrechung auf. Dadurch, dass an dem erfindungsgemäß hergestellten Leiterring und somit der daraus gebildeten Windung keine Lötverbindungsstellen angeordnet sind, wird die Robustheit des Leiterrings, einer dadurch gebildeten Läuferspule bzw. einer entsprechend ausgebildeten rotierenden elektrischen Maschine verbessert. Vorzugsweise ist die Unterbrechung nicht an dem Verbindungsabschnitt des Längsleiters mit einem der Querleiter in einem Eckbereich des Leiterrings bzw. der Windung angeordnet.

Des Weiteren wird der Leiterring zur Anpassung seiner Formgebung an eine Formgebung des Läufers und zur Herstellung der Windung im Bereich seiner Querleiter umgeformt. Hierdurch kann der Leiterring optimal und passgenau an die jeweilige Formgebung des Läufers angepasst werden. Die Formgebung des Läufers kann beispielsweise als CAD-Datei hinterlegt sein und direkt einer rechnerunterstützten Fertigung ("computer-aided manufacturing"; CAM) zur Fertigung eines erfindungsgemäßen Leiterrings zugeführt werden.

Zur Herstellung des Leiterrings wird bevorzugt ein einstückig, im Wesentlichen rechteckig und geschlossen ausgebildeter Leiterrohling aus einem Metallkörper ausgeschnitten oder in einem Gießverfahren hergestellt, wobei ein Endbereich eines Längsleiters des Leiterrohlings zur Ausbildung der Unterbrechung durchtrennt wird. Der Leiterring kann beispielsweise aus einem Metallkörper in Form einer Kupferplatte ausgeschnitten werden. Alternativ kann der Leiterring durch Gießen eines geeigneten metallischen Werkstoffs hergestellt werden. Das Durchtrennen des einen Längsleiters des Leiterrings kann auf irgendeine geeignete Art und Weise erfolgen.

Bevorzugt wird der Leiterrohling mittels Wasserstrahlschneiden aus dem Metallkörper ausgeschnitten. Wasserstrahlschneiden hat den Vorteil, dass beim Ausschneiden kein Wärmeeintrag in den Leiterring erfolgt, welcher die Materialeigenschaften des Leiterrings beeinflussen könnte. Das Wasserstrahlschneiden kann unter Verwendung einer hinterlegten CAD-Datei erfolgen, welche die Formgebung des Läufers bzw. von an dem Läufer angeordneten Längsnuten berücksichtigen kann.

Zur Herstellung des Leiterrings wird alternativ bevorzugt ein durch Durchziehen hergestellter Leiterdraht im Wesentlichen zu einem Rechteck umgeformt, wobei die Unterbrechung durch eine voneinander beabstandete Anordnung der Enden des umgeformten Leiterdrahtes ausgebildet wird. Dies stellt eine einfache Möglichkeit zur Ausbildung des Leiterrings dar, bei der der Schritt des Durchtrennens eines Längsleiters des Leiterrings entfällt, jedoch nach dem Durchziehen ein Biegevorgang am Leiterdraht erfolgen muss.

Die Querleiter werden bevorzugt durch Biegen über wenigstens eine der Formgebung des Läufers zumindest teilweise entsprechende Schablone umgeformt. Dies macht herstellerseitig eine einfache Umformung der Querleiter bzw. des Leiterrings möglich.

Bevorzugt wird der Leiterring zumindest teilweise mit einer elektrischen Isolierschicht versehen. Hierdurch kann bei der Ausbildung einer Läuferspule unter Verwendung von erfindungsgemäß hergestellten Windungen die herkömmlich vorgesehene separate Anordnung von einzelnen elektrischen Isolationen entfallen, was den Aufwand zur Ausbildung einer Läuferspule reduziert. Zudem bewegt sich eine an einem Leiterring bzw. einer Windung angeordnete elektrische Isolierschicht mit dem jeweiligen Leiterring mit, so dass es bei thermischen Ausdehnungen von Läuferspulen nicht wie im Stand der Technik dazu kommen kann, dass sich elektrische Isolationen relativ zu den Spulenwindungen verschieben und dadurch Austrittsöffnungen von radialen Kühlkanälen an dem Läufer verstopfen.

Die elektrische Isolierschicht wird bevorzugt durch Kleben oder Beschichten stoffschlüssig mit dem Leiterring verbunden. Die Beschichtung kann beispielsweise eine Pulverlackbeschichtung sein. Im Falle des Ausschneidens des Leiterrings aus einer Metallplatte kann vorab die Metallplatte großflächig mit der Beschichtung versehen werden.

Bevorzugt wird der Leiterring zumindest teilweise mit einer Gleitschicht versehen. Diese kann zwischen einer an einem einer erfindungsgemäß hergestellten Windung angeordneten elektrischen Isolierschicht und einer weiteren Windung angeordnet sein, wodurch verhindert wird, dass es bei thermisch bedingten Relativbewegungen zwischen Wicklungen einer Läuferspule aufgrund von Reibung zu Schäden an elektrischen Isolierschichten kommt.

Die erfindungsgemäße Windung für eine Spulenwicklung eines Läufers einer rotierenden elektrischen Maschine, insbesondere eines Turbogenerators, umfasst zwei parallel zueinander und beabstandet voneinander angeordnete, in Längsnuten an dem Läufer anordbare Längsleiter und zwei beabstandet voneinander angeordnete, die Längsleiter jeweils endseitig miteinander verbindende Querleiter, wobei ausschließlich ein Längsleiter in einem seiner Endbereiche eine Unterbrechung aufweist, und wobei die Querleiter zur Anpassung einer Formgebung der Windung an eine Formgebung des Läufers umgeformt sind.

Die erfindungsgemäße Windung kann unter Verwendung des erfindungsgemäßen Verfahrens hergestellt werden. Mit der erfindungsgemäßen Windung sind die oben mit Bezug auf das Verfahren genannten Vorteile entsprechend verbunden.

Die Windung weist bevorzugt wenigstens eine elektrische Isolierschicht auf, die stoffschlüssig mit der übrigen Windung verbunden ist. Dies ist mit den oben mit Bezug auf die entsprechende Ausgestaltung des Verfahrens genannten Vorteilen entsprechend verbunden.

Bevorzugt weist die Windung wenigstens eine Gleitschicht auf, die stoffschlüssig mit der übrigen Windung verbunden ist. Auch dies ist mit den oben mit Bezug auf die entsprechende Ausgestaltung des Verfahrens genannten Vorteilen entsprechend verbunden.

Nach dem erfindungsgemäßen Verfahren zum Anbringen einer Windung gemäß einer der vorgenannten Ausgestaltungen oder einer beliebigen Kombination derselben an einem mit Längsnuten versehenen Läufer einer rotierenden elektrischen Maschine, insbesondere eines Turbogenerators, wird der Längsleiter, der keine Unterbrechung aufweist, zur Überführung der Windung in ihren Montagezustand vor seiner Anordnung in einer Längsnut des Läufers derart umgeformt, dass sich der Querleiter, welcher näher zu der Unterbrechung angeordnet ist, bei an dem Läufer angeordneter Windung in einem größeren Abstand zu dem Läufer als die Fläche erstreckt, die durch die Windung mit nicht umgeformtem Längsleiter definiert ist.

Die Umformung des Längsleiters zur Überführung der Windung in ihren Montagezustand wird durch die Ausbildung der einen Unterbrechung an dem anderen Längsleiter möglich. Die Überführung der Windung in ihren Montagezustand ist deshalb erforderlich, da die Windung an einer gekrümmten Fläche des Läufers anzuordnen ist, was ein einfaches Aufstecken einer Windung bzw. Einfügen von Längsleitern in Längsnuten an einem Läufer unmöglich macht.

Bevorzugt wird der Längsleiter, der keine Unterbrechung aufweist, zur Überführung der Windung in ihren Montagezustand vor seiner Anordnung in einer Längsnut des Läufers bezüglich des Läufers um ein vorgebbares Maß radial nach außen gebogen oder um seine Längsachse um ein vorgebbares Maß verdreht. Hierdurch kann sich der Querleiter, welcher näher zu der Unterbrechung angeordnet ist, bei an dem Läufer angeordneter Windung in einem größeren Abstand zu dem Läufer als die Fläche erstrecken, die durch die Windung mit nicht umgeformtem Längsleiter definiert ist.

Der Längsleiter, der keine Unterbrechung aufweist, wird bevorzugt zur Überführung der Windung in ihren Montagezustand vor seiner Anordnung in einer Längsnut des Läufers bezüglich des Läufers um seine Längsachse verdreht. Der Winkel, um den der Längsleiter verdreht wird, ist 90° oder vorzugsweise an die jeweilige Formgebung des Läufers angepasst, an dem die Windung angeordnet werden soll.

Die Längsleiter werden bevorzugt bei in ihrem Montagezustand befindlicher Windung bezüglich des Läufers in axialer Richtung von der Nichtschaltseite des Läufers in Richtung der Schaltseite des Läufers in Längsnuten eingeschoben. Hierbei kann eine Gleithilfe eingesetzt werden. Auch kann eine Montagerolle verwendet werden, welche beim Einschieben der Längsleiter in die Längsnuten auf einer radialen Außenseite eines eine Längsnut in Längsrichtung des Läufers seitlich begrenzenden Rotorzahns abrollen und beispielsweise ein freies Ende eines Längsleiters tragen kann. Um Schäden an der Windung beim Einschieben der Längsleiter in die Längsnuten zu vermeiden, können die Ecken der Windung mit schützenden Klemmen, beispielsweise Überziehschuhen, versehen sein.

Der umgeformte Längsleiter wird bevorzugt bei in ihrer Funktionsstellung relativ zu dem Läufer befindlicher Windung zur Angleichung seiner Formgebung an die Formgebung des anderen Längsleiters umgeformt. Hierdurch nimmt die Windung ihre zur Ausbildung einer Läuferspule gewünschte Form ein.

Im Folgenden werden bevorzugte Ausführungsformen der erfindungsgemäßen Windung und deren Anordnung an einem Läufer anhand der beigefügten schematischen Zeichnungen erläutert.

Es zeigen:
- Fig. 1: eine perspektivische Darstellung eines Ausführungsbeispiels für eine an einem Läufer angeordnete, in ihrem Montagezustand befindliche Windung,
- Fig. 2: einen weitere perspektivische Darstellung der in Figur 1 gezeigten, an dem Läufer angeordneten und in ihrem Montagezustand befindlichen Windung,
- Fig. 3: einen weitere perspektivische Darstellung der in den Figur 1 und 2 gezeigten, an dem Läufer angeordneten und in ihrem Montagezustand befindlichen Windung,
- Fig. 4: einen weitere perspektivische Darstellung der in den Figur 1 bis 3 gezeigten, an dem Läufer angeordneten und in ihrem Montagezustand befindlichen Windung,
- Fig. 5: eine perspektivische Darstellung eines weiteren Ausführungsbeispiels für eine an einem Läufer angeordnete, in ihrem Montagezustand befindliche Windung,
- Fig. 6: einen weitere perspektivische Darstellung der in Figur 5 gezeigten, an dem Läufer angeordneten und in ihrem Montagezustand befindlichen Windung,
- Fig. 7: einen weitere perspektivische Darstellung der in den Figur 5 und 6 gezeigten, an dem Läufer angeordneten und in ihrem Montagezustand befindlichen Windung, und
- Fig. 8: einen weitere perspektivische Darstellung der in den Figur 5 bis 7 gezeigten, an dem Läufer angeordneten und in ihrem Montagezustand befindlichen Windung.

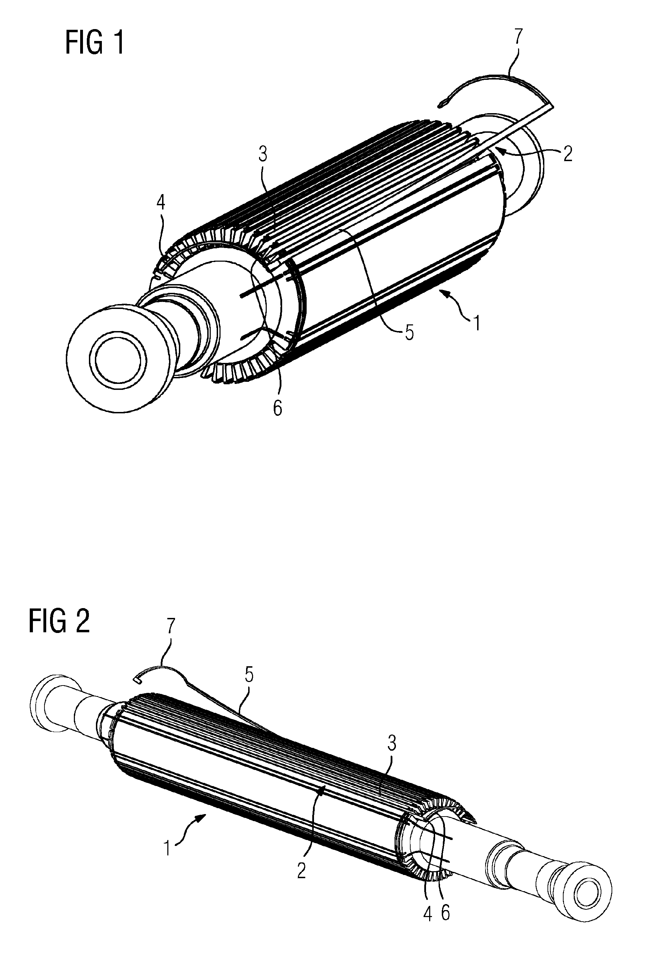

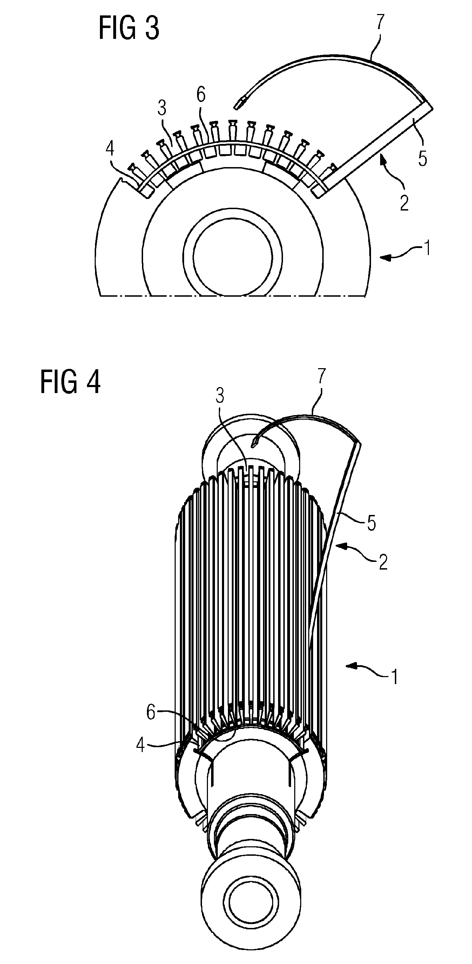

Die Figuren 1 bis 4 zeigen verschiedene perspektivische Darstellungen eines Ausführungsbeispiels für eine an einem Läufer 1 einer nicht näher dargestellten rotierenden elektrischen Maschine in Form eines Turbogenerators angeordnete, in ihrem Montagezustand befindliche Windung 2 für eine Spulenwicklung des Läufers 1. Das in den Figuren 1 bis 4 dem Betrachter zugewandte Ende des Läufers 1 bildet die Nichtschaltseite des Läufers 1 aus, während das dem Betrachter abgewandte Ende des Läufers 1 die Schaltseite des Läufers 1 ausbildet.

Die Windung 2 umfasst zwei parallel zueinander und beabstandet voneinander angeordnete, in Längsnuten 3 an dem Läufer 1 anordbare Längsleiter 4 und 5 und zwei beabstandet voneinander angeordnete, die Längsleiter 4 und 5 jeweils endseitig miteinander verbindende Querleiter 6 und 7 auf. Ausschließlich der Längsleiter 4 weist in einem seiner Endbereiche eine Unterbrechung auf. Die Querleiter 6 und 7 sind zur Anpassung einer Formgebung der Windung 2 an eine Formgebung des Läufers 1 umgeformt. Die Windung 2 weist eine nicht gezeigte elektrische Isolierschicht auf, die stoffschlüssig mit der übrigen Windung 2 verbunden ist. Zudem weist die Windung 2 eine nicht gezeigte, an der elektrischen Isolierschicht angeordnete Gleitschicht auf, die stoffschlüssig mit der übrigen Windung 2 verbunden ist.

Zur Herstellung der Windung 2 wurde ein einstückig, im Wesentlichen rechteckig und geschlossen ausgebildeter Leiterrohling aus einer mit einer elektrischen Isolierschicht beschichteten Kupferplatte mittels Wasserstrahlschneiden ausgeschnitten, der zwei parallel zueinander und beabstandet voneinander angeordnete, in Längsnuten 3 an dem Läufer 1 anordbare Längsleiter 4 und 5 und zwei parallel zueinander und beabstandet voneinander angeordnete, die Längsleiter 4 und 5 jeweils endseitig miteinander verbindende Querleiter 6 und 7 aufweist. Ein Endbereich des Längsleiters 4 des Leiterrohlings wurde zur Ausbildung einer Unterbrechung durchtrennt, wodurch ein einstückig und im Wesentlichen rechteckig ausgebildeter Leiterring ausgebildet wurde. Der Leiterring wurde zur Anpassung seiner Formgebung an eine Formgebung des Läufers 1 im Bereich seiner Querleiter 6 und 7 umgeformt, wobei die Querleiter 6 und 7 durch Biegen über eine der Formgebung des Läufers 1 zumindest teilweise entsprechende, nicht gezeigte Schablone umgeformt wurden.

Zum Anbringen der Windung 2 an dem mit Längsnuten 3 versehenen Läufer 1 wurde der Längsleiter 5, der keine Unterbrechung aufweist, zur Überführung der Windung 2 in ihren gezeigten Montagezustand vor seiner Anordnung in einer Längsnut 3 des Läufers 1 derart umgeformt, dass sich der Querleiter 7, welcher näher zu der Unterbrechung angeordnet ist, bei an dem Läufer 1 angeordneter Windung 2 in einem größeren Abstand zu dem Läufer 1 als die Fläche erstreckt, die durch die Windung 2 mit nicht umgeformtem Längsleiter 5 definiert ist. Hierzu wurde der Längsleiter 5, der keine Unterbrechung aufweist, zur Überführung der Windung 2 in ihren Montagezustand vor seiner Anordnung in einer Längsnut 3 des Läufers 1 bezüglich des Läufers 1 um ein vorgebbares Maß radial nach außen gebogen, wie es in den Figuren 1 bis 4 zu sehen ist. Anschließend wurden die Längsleiter 4 und 5 bei in ihrem Montagezustand befindlicher Windung 2 bezüglich des Läufers 1 in axialer Richtung von der dem Betrachter zugewandten Nichtschaltseite des Läufers 1 in Richtung der dem Betrachter abgewandten Schaltseite des Läufers 1 in Längsnuten 3 eingeschoben, bis die in den Figuren 1 bis 4 gezeigte Funktionsstellung der Windung 2 relativ zu dem Läufer 1 erreicht wurde. In einem abschließenden, nicht gezeigten Schritt kann der umgeformte Längsleiter 5 bei in ihrer Funktionsstellung relativ zu dem Läufer 1 befindlicher Windung 2 zur Angleichung seiner Formgebung an die Formgebung des anderen Längsleiters 4 umgeformt werden.

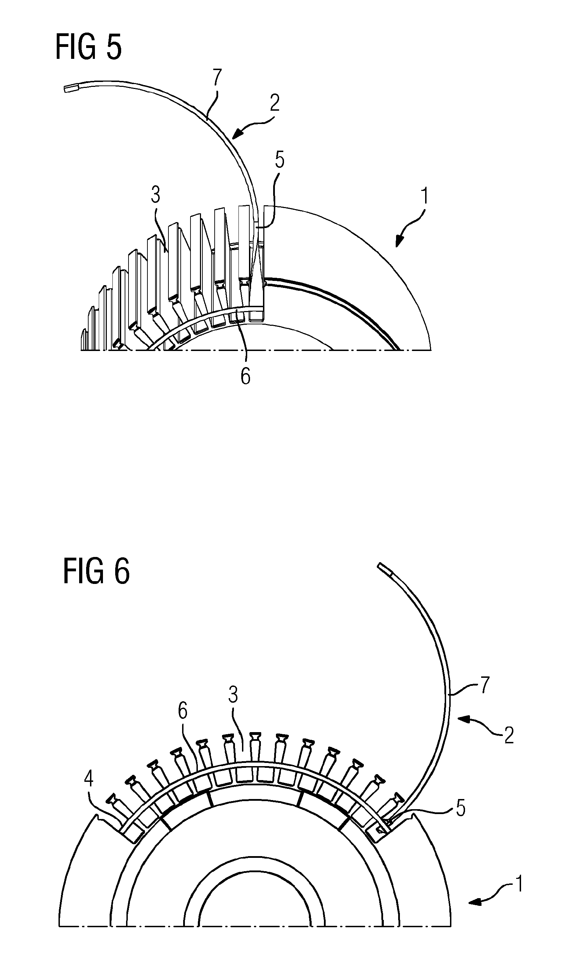

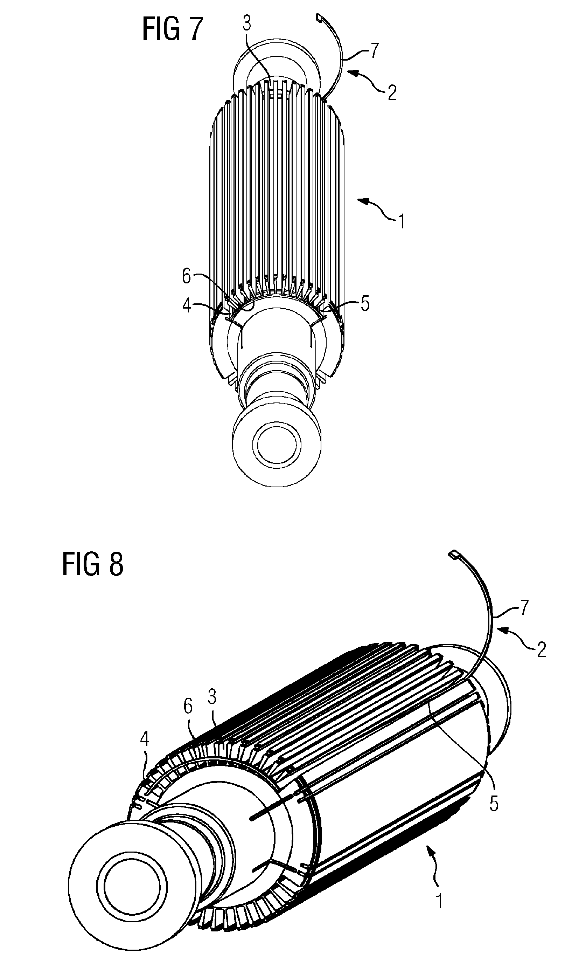

Die Figuren 5 bis 8 zeigen verschiedene perspektivische Darstellungen eines weiteren Ausführungsbeispiels für eine an einem Läufer 1 einer nicht näher dargestellten rotierenden elektrischen Maschine in Form eines Turbogenerators angeordnete, in ihrem Montagezustand befindliche Windung 2 für eine Spulenwicklung des Läufers 1. Das in den Figuren 5 bis 8 dem Betrachter zugewandte Ende des Läufers 1 bildet eine Nichtschaltseite des Läufers 1 aus, während das dem Betrachter abgewandte Ende des Läufers 1 eine Schaltseite des Läufers 1 ausbildet.

Das in den Figuren 5 bis 8 gezeigte Ausführungsbeispiel unterscheidet sich von dem in den Figuren 1 bis 4 gezeigten Ausführungsbeispiel dadurch, dass der Längsleiter 5, der keine Unterbrechung aufweist, nicht zur Überführung der Windung 2 in ihren in den Figuren 2 bis 8 gezeigten Montagezustand vor seiner Anordnung in einer Längsnut 3 des Läufers 1 bezüglich des Läufers 1 um ein vorgebbares Maß radial nach außen gebogen wurde, sondern dass der Längsleiter 5 zur Überführung der Windung 2 in ihren gezeigten Montagezustand vor seiner Anordnung in einer Längsnut 3 des Läufers 1 bezüglich des Läufers 1 um seine Längsachse um 90° im Uhrzeigersinn verdreht worden ist.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Herstellen einer Windung (2) für eine Spulenwicklung eines Läufers (1) einer rotierenden elektrischen Maschine, insbesondere eines Turbogenerators,
wobei ein einstückig und im Wesentlichen rechteckig ausgebildeter Leiterring hergestellt wird, der zwei parallel zueinander und beabstandet voneinander angeordnete, in Längsnuten (3) an dem Läufer (1) anordbare Längsleiter (4, 5) und zwei parallel zueinander und beabstandet voneinander angeordnete, die Längsleiter (4, 5) jeweils endseitig miteinander verbindende Querleiter (6, 7) aufweist,
wobei ausschließlich ein Längsleiter (5) in einem seiner Endbereiche eine Unterbrechung aufweist, und
wobei der Leiterring zur Anpassung seiner Formgebung an eine Formgebung des Läufers (1) im Bereich seiner Querleiter (6, 7) umgeformt wird.

2. Verfahren gemäß Anspruch 1,
wobei zur Herstellung des Leiterrings ein einstückig, im Wesentlichen rechteckig und geschlossen ausgebildeter Leiterrohling aus einem Metallkörper ausgeschnitten oder in einem Gießverfahren hergestellt wird, und
wobei ein Endbereich eines Längsleiters (4) des Leiterrohlings zur Ausbildung der Unterbrechung durchtrennt wird.

3. Verfahren gemäß Anspruch 2,
wobei der Leiterrohling mittels Wasserstrahlschneiden aus dem Metallkörper ausgeschnitten wird.

4. Verfahren gemäß Anspruch 1,
wobei zur Herstellung des Leiterrings ein durch Durchziehen hergestellter Leiterdraht im Wesentlichen zu einem Rechteck umgeformt wird, und
wobei die Unterbrechung durch eine voneinander beabstandete Anordnung der Enden des umgeformten Leiterdrahtes ausgebildet wird.

5. Verfahren gemäß einem der Ansprüche 1 bis 4,
wobei die Querleiter (6, 7) durch Biegen über wenigstens eine der Formgebung des Läufers (1) zumindest teilweise entsprechende Schablone umgeformt werden.

6. Verfahren gemäß einem der Ansprüche 1 bis 5,
wobei der Leiterring zumindest teilweise mit einer elektrischen Isolierschicht versehen wird.

7. Verfahren gemäß Anspruch 6,
wobei die Isolierschicht durch Kleben oder Beschichten stoffschlüssig mit dem Leiterring verbunden wird.

8. Verfahren gemäß einem der Ansprüche 1 bis 7,
wobei der Leiterring zumindest teilweise mit einer Gleitschicht versehen wird.

9. Windung (2) für eine Spulenwicklung eines Läufers (1) einer rotierenden elektrischen Maschine, insbesondere eines Turbogenerators, aufweisend zwei parallel zueinander und beabstandet voneinander angeordnete, in Längsnuten (3) an dem Läufer (1) anordbare Längsleiter (4, 5) und zwei beabstandet voneinander angeordnete, die Längsleiter (4, 5) jeweils endseitig miteinander verbindende Querleiter (6, 7), wobei ausschließlich ein Längsleiter (5) in einem seiner Endbereiche eine Unterbrechung aufweist, und
wobei die Querleiter (6, 7) zur Anpassung einer Formgebung der Windung (2) an eine Formgebung des Läufers (1) umgeformt sind.

10. Windung (2) gemäß Anspruch 9,
wobei die Windung (2) wenigstens eine elektrische Isolierschicht aufweist, die stoffschlüssig mit der übrigen Windung (2) verbunden ist.

11. Windung (2) gemäß Anspruch 9 oder 10,
wobei die Windung (2) wenigstens eine Gleitschicht aufweist, die stoffschlüssig mit der übrigen Windung (2) verbunden ist.

12. Verfahren zum Anbringen einer Windung (2) gemäß einem der Ansprüche 9 bis 11 an einem mit Längsnuten (3) versehenen Läufer (1) einer rotierenden elektrischen Maschine, insbesondere eines Turbogenerators,
wobei der Längsleiter (5), der keine Unterbrechung aufweist, zur Überführung der Windung (2) in ihren Montagezustand vor seiner Anordnung in einer Längsnut (3) des Läufers (1) derart umgeformt wird, dass sich der Querleiter (7), welcher näher zu der Unterbrechung angeordnet ist, bei an dem Läufer (1) angeordneter Windung (2) in einem größeren Abstand zu dem Läufer (1) als die Fläche erstreckt, die durch die Windung (2) mit nicht umgeformtem Längsleiter (5) definiert ist.

13. Verfahren gemäß Anspruch 12,
wobei der Längsleiter (5), der keine Unterbrechung aufweist, zur Überführung der Windung (2) in ihren Montagezustand vor seiner Anordnung in einer Längsnut (3) des Läufers (1) bezüglich des Läufers (1) um ein vorgebbares Maß radial nach außen gebogen oder um seine Längsachse um ein vorgebbares Maß verdreht wird.

14. Verfahren gemäß Anspruch 13,
wobei der Längsleiter (5), der keine Unterbrechung aufweist, zur Überführung der Windung (2) in ihren Montagezustand vor seiner Anordnung in einer Längsnut (3) des Läufers (1) bezüglich des Läufers (1) um seine Längsachse um 90° verdreht wird.

15. Verfahren gemäß Anspruch 13 oder 14,
wobei die Längsleiter (4, 5) bei in ihrem Montagezustand befindlicher Windung (2) bezüglich des Läufers (1) in axialer Richtung von der Nichtschaltseite des Läufers (1) in Richtung der Schaltseite des Läufers (1) in Längsnuten (3) eingeschoben werden.

16. Verfahren gemäß einem der Ansprüche 12 bis 15,
wobei der umgeformte Längsleiter (5) bei in ihrer Funktionsstellung relativ zu dem Läufer (1) befindlicher Windung (2) zur Angleichung seiner Formgebung an die Formgebung des anderen Längsleiters (4) umgeformt wird.
